# EUROPEAN PATENT APPLICATION

(11) **EP 4 832 484 A1**
(43) Date of publication of application: **28.10.2026**
(21) Application number: 25305580.0
(22) Date of filing: 23.04.2025
(51) Int. Cl.: H04N 19/109, H04N 19/154, H04N 19/159, H04N 19/176, H04N 19/577, H04N 19/70

(54) **BI-PREDICTION MERGING WITH CU-LEVEL WEIGHT AND WEIGHTED LOCAL ILLUMINATION COMPENSATION**

(71) Applicant: InterDigital CE Patent Holdings, SAS, 75017 Paris (FR)
(72) Inventor: THIEBAUD, Sylvain, 35530 NOYAL SUR VILAINE (FR); LE GUYADEC, Pascal, 35760 SAINT GREGOIRE (FR); FRANCOIS, Edouard, 35890 BOURG DES COMPTES (FR); GALPIN, Franck, 35235 THORIGNE-FOUILLARD (FR)
(74) Representative: Interdigital

(57) **Abstract**

A method comprising: obtaining (1000) a current block and two motion compensated reference blocks for the current block;
obtaining (1001) an index for the current block, a value of the index being comprised in a set of values, at least one value of the set of values representing an illumination compensation (IC) based mode and at least one other value of the set of values representing a Bi-prediction merging with CU-level Weight (BCW) based mode; and,
obtaining a predictor for the current block according to the IC based mode (1003) or the BCW based mode (1004, 1005) from the two motion compensated reference blocks responsive to (1002) the index.

## Description

### BACKGROUND

The present application is related to the domain of prediction of motion information in video compression.

To achieve high compression efficiency, video coding schemes usually employ predictions and transforms to leverage spatial and temporal redundancies in a video content. During an encoding, pictures of the video content are divided into blocks of pixels, these blocks being then partitioned into one or more sub-blocks, called original sub-blocks in the following. An intra or inter prediction is then applied to each sub-block to exploit intra or inter picture correlations. Whatever the prediction method used (intra or inter), a predictor sub-block is determined for each original sub-block. Then, a sub-block representing a difference between the original sub-block and the predictor sub-block, often denoted as a prediction error sub-block, a prediction residual sub-block or simply a residual sub-block, is transformed, quantized and entropy coded to generate an encoded video stream. To reconstruct the video, the compressed data is decoded by inverse processes corresponding to the transform, quantization and entropic coding.

Intra and inter prediction are continuously evolving with improvements of existing prediction tools or appearance of new prediction tools.

The family of inter prediction modes comprises now numerous prediction modes, some of them being close conceptually. This is case for example of local illumination compensation (LIC) and Bi-prediction merging with CU-level Weight (BCW). LIC is intended to compensate locally (at the block level) variations of illuminations between a current block and one prediction (uni-prediction LIC) or two predictions (bi-prediction LIC). BCW can be viewed as a block level weighted bi-prediction.

Currently, bi-prediction LIC compensates each prediction with two LIC linear models, the LIC linear models parameters being determined using templates. When the BCW and bi-prediction LIC apply jointly, BCW weights are considered in the LIC linear models parameters.

BCW and LIC are therefore independent inter tools but linked by the weight applied to each prediction. Two signaling are required at block level: a BCW index to signal the BCW weights and a LIC flag to signal a use of LIC.

It is desirable to propose solutions to create a synergy between BCW and bi-directional LIC.

### BRIEF SUMMARY

In a first aspect, one or more of the present embodiments provide a method comprising:
obtaining a current block and two motion compensated reference blocks for the current block;
obtaining an index for the current block, a value of the index being comprised in a set of values, at least one value of the set of values representing an illumination compensation (IC) based mode and at least one other value of the set of values representing a Bi-prediction merging with CU-level Weight (BCW) based mode; and,
obtaining a predictor for the current block according to the IC based mode or the BCW based mode from the two motion compensated reference blocks responsive to the index.

In an embodiment, each IC based mode is a local illumination compensation mode in which an IC model is determined for each motion compensation reference block, parameters of each IC model being determined based on a minimization of an error between a first template of reconstructed samples neighboring the current block and a first template of reconstructed sampled neighboring the motion compensated reference block.

In an embodiment, each IC based mode is a weighted local illumination compensation mode in which a single IC model is determined for the two motion compensation reference blocks, parameters of each IC model being determined based on a minimization of an error between a first template of reconstructed samples neighboring the current block and first templates of reconstructed sampled neighboring the motion compensated reference blocks.

In an embodiment, the set of values comprises at least two values representing an IC based mode, the parameters of the IC model used in each IC based mode being determined using different first templates.

In an embodiment, the set of values represents an ordered list of IC based modes and BCW based modes, an order of the BCW based modes in the ordered list depending on a distance between the parameters of the IC model of the IC based modes and weights of the BCW based modes.

In an embodiment, the set of values represents an ordered list of IC based modes and BCW based modes, an order of the BCW based modes in the ordered list depending on a distortion computed for each IC based mode and BCW based mode of the ordered list between a second template of reconstructed samples neighboring the current block and a prediction of the second template of reconstructed samples neighboring the current block obtained by applying the IC based mode or the BCW based mode on second templates of reconstructed samples neighboring the two motion compensated reference blocks.

In an embodiment, at least one value of the set of values representing an illumination compensation (IC) based mode represents an IC based mode using an IC model inherited from a previous block.

In an embodiment, no additional syntax element is signaled for indicating a use of the IC based mode.

In a second aspect, one or more of the present embodiments provide a device comprising electronic circuitry configured for:
obtaining a current block and two motion compensated reference blocks for the current block;
obtaining an index for the current block, a value of the index being comprised in a set of values, at least one value of the set of values representing an illumination compensation (IC) based mode and at least one other value of the set of values representing a Bi-prediction merging with CU-level Weight (BCW) based mode; and,
obtaining a predictor for the current block according to the IC based mode or the BCW based mode from the two motion compensated reference blocks responsive to the index.

In an embodiment, each IC based mode is a local illumination compensation mode in which an IC model is determined for each motion compensation reference block, parameters of each IC model being determined based on a minimization of an error between a first template of reconstructed samples neighboring the current block and a first template of reconstructed sampled neighboring the motion compensated reference block.

In an embodiment, each IC based mode is a weighted local illumination compensation mode in which a single IC model is determined for the two motion compensation reference blocks, parameters of each IC model being determined based on a minimization of an error between a first template of reconstructed samples neighboring the current block and first templates of reconstructed sampled neighboring the motion compensated reference blocks.

In an embodiment, the set of values comprises at least two values representing an IC based mode, the parameters of the IC model used in each IC based mode being determined using different first templates.

In an embodiment, the set of values represents an ordered list of IC based modes and BCW based modes, an order of the BCW based modes in the ordered list depending on a distance between parameters of the IC model of the IC based modes and weights of the BCW based modes.

In an embodiment, the set of values represents an ordered list of IC based modes and BCW based modes, an order of the IC based modes and of the BCW based modes in the ordered list depending on a distortion computed for each IC based mode and BCW based mode of the ordered list between a second template of reconstructed samples neighboring the current block and a prediction of the second template of reconstructed samples neighboring the current block obtained by applying the IC based mode or the BCW based mode on second templates of reconstructed samples neighboring the two motion compensated reference blocks.

In an embodiment, at least one value of the set of values representing an illumination compensation (IC) based mode represents an IC based mode using an IC model inherited from a previous block.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A describes an example of a context in which following embodiments can be implemented;
FIG. 1B is a block diagram illustrating an example system according to one or more embodiments of the present disclosure;
FIG. 2 illustrates an example of partitioning undergone by an image of pixels of an original video;
FIG. 3 is a block diagram illustrating an example video encoder according to one or more embodiments of the present disclosure;
FIG. 4 is a block diagram illustrating an example video decoder according to one or more embodiments of the present disclosure;
FIG. 5 illustrates templates used in local illumination compensation;
FIG. 6 illustrates templates used in bi-prediction local illumination compensation;
FIG. 7 illustrates schematically a process for reconstructing a block according to the bi-prediction local illumination compensation mode;
FIG. 8 illustrates schematically a process for reconstructing a block according to the Bi-prediction merging with CU-level Weight mode;
FIG. 9 illustrates schematically a known process of joint application of the local illumination compensation mode and the Bi-prediction merging with CU-level Weight mode;
FIG. 10 illustrates schematically an example of embodiment wherein the synergy between an illumination compensation based mode and the Bi-prediction merging with CU-level Weight mode is improved;
Fig. 11 illustrates schematically a weighted local illumination compensation mode; and,
FIG. 12 illustrates schematically templates used for reordering a list of weight index.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

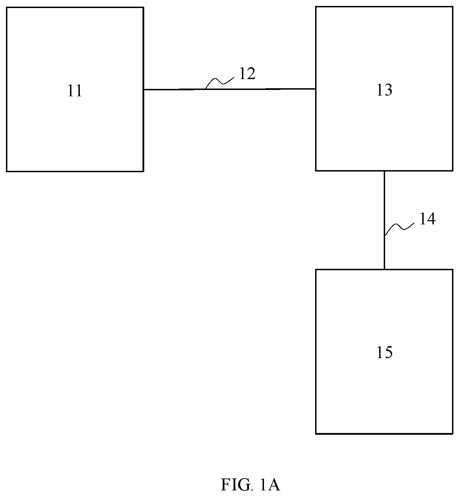

**FIG. 1A** describes an example of a context in which following embodiments can be implemented.

In FIG. 1A, a system 11, that could be a camera, a storage device, a computer, a server or any device capable of delivering a video stream, transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display 15 are comprised in a TV, a computer, a tablet, a smartphone, a head-mounted display, etc.

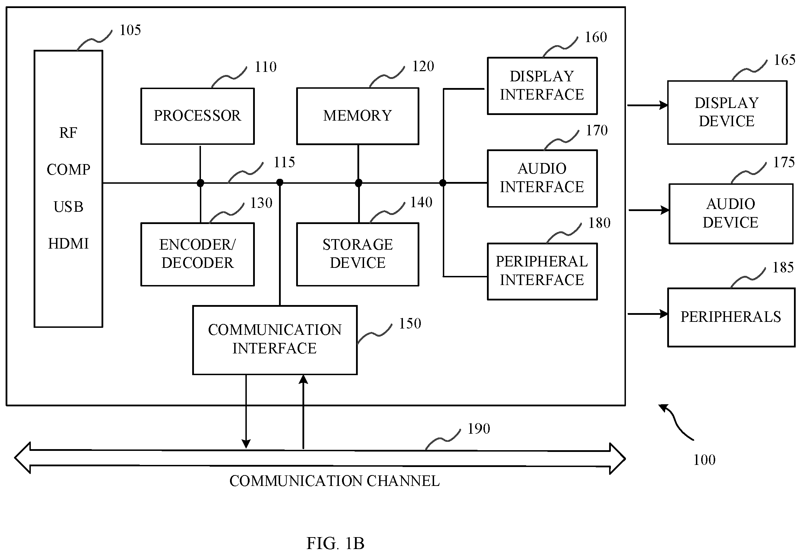

**FIG. 1B** illustrates an example of system 100 implementing the system 11 or the system 13 in which embodiments of the present disclosure can be implemented.

The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces. All these types of processors are electronic circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process raw video data/encoded video data and to provide encoded video data/decoded video data. The encoder/decoder module 130 may include one or more processors and/or memory (not shown). Although FIG. 1B depicts the encoder/decoder module 130 as a separate element of system 100, it will be understood that the processor 110 and the encoder/decoder module 130 may be collocated and/or integrated together as a combination of hardware and/or software, e.g., in an electronic package, circuitry or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190 (corresponding to communication channel 12 or 14 in FIG. 1A). The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

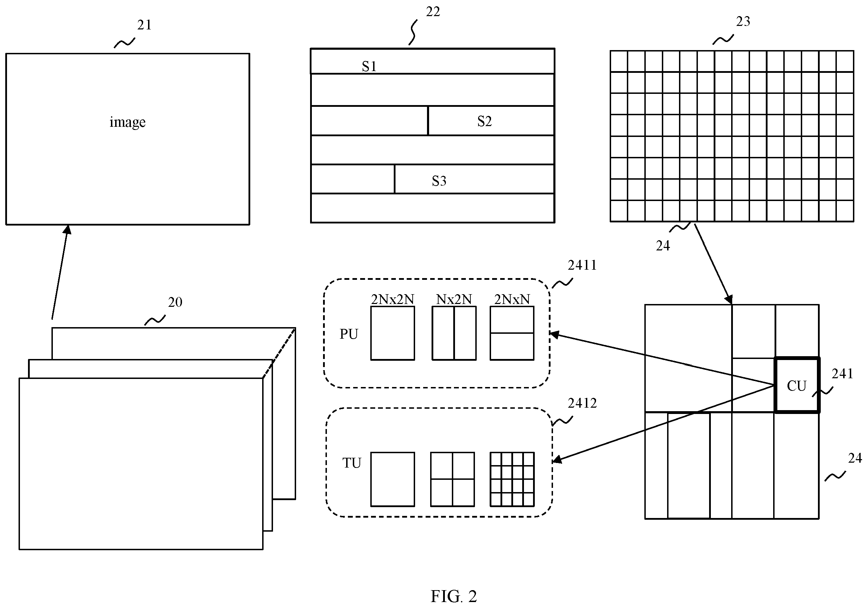

FIGS. 2, 3 and 4 introduce an example of video format.

**FIG. 2** illustrates an example of partitioning undergone by a picture of pixels 21 of an original video sequence 20. It is considered here that a pixel is composed of three components: a luminance component Y and two chrominance components U and V (also denoted herein by Cb and Cr). Other types of pixels are however possible comprising less or more components such as only a luminance component or an additional depth component or transparency component.

A picture is divided into a plurality of coding entities. First, as represented by reference 23 in FIG. 2, a picture is divided in a grid of blocks called coding tree units (CTU). A CTU consists of an N×N block of luminance samples together with two corresponding blocks of chrominance samples. N is generally a power of two. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile.

In the example in FIG. 2, as represented by reference 22, the picture 21 is divided into three slices S1, S2 and S3 of the raster-scan slice mode, each comprising a plurality of tiles (not represented), each tile comprising only one brick.

As represented by reference 24 in FIG. 2, a CTU may be partitioned into the form of a hierarchical tree of one or more sub-blocks called coding units (CU). The CTU is the root (i.e. the parent node) of the hierarchical tree and can be partitioned in a plurality of CU (i.e. child nodes). Each CU becomes a leaf of the hierarchical tree if it is not further partitioned in smaller CU or becomes a parent node of smaller CU (i.e. child nodes) if it is further partitioned.

In the example of FIG. 2, the CTU 24 is first partitioned in "4" square CU using a quadtree type partitioning. The upper left CU is a leaf of the hierarchical tree since it is not further partitioned, i.e. it is not a parent node of any other CU. The upper right CU is further partitioned in "4" smaller square CU using again a quadtree type partitioning. The bottom right CU is vertically partitioned in "2" rectangular CU using a binary tree type partitioning. The bottom left CU is vertically partitioned in "3" rectangular CU using a ternary tree type partitioning.

During the coding of a picture, the partitioning is adaptive, each CTU being partitioned so as to optimize a compression efficiency of the CTU criterion.

In HEVC (ITU-T H.265) appeared the concept of prediction unit (PU) and transform unit (TU). Indeed, in HEVC, the coding entity that is used for prediction (i.e. a PU) and transform (i.e. a TU) can be a subdivision of a CU. For example, as represented in FIG. 2, a CU of size 2N×2N, can be divided in PU 2411 of size N×2N or of size 2N×N. In addition, said CU can be divided in "4" TU 2412 of size N×N or in "16" TU of size (N/2)×(N/2).

One can note that in VVC (ITU-T H.266), except in some particular cases, frontiers of the TU and PU are aligned on the frontiers of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

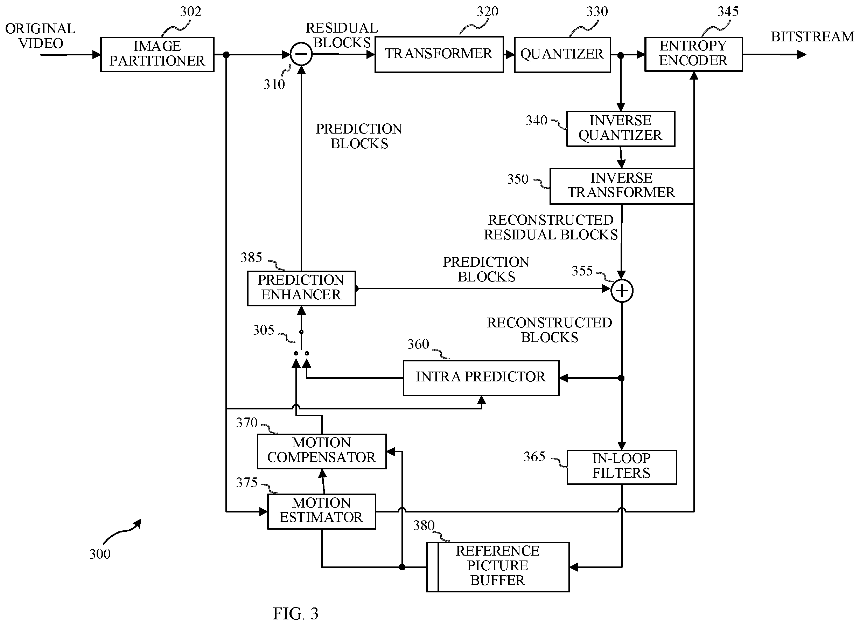

**FIG. 3** is a block diagram illustrating an example of video encoder 300 that may be employed by the system 100 (e.g., via the processor 110 or the encoder/decoder module 130) described with respect to FIG. 1B. The video encoder 300 may be an encoder that employs video compression technologies, standards, specification, or protocols, including Advanced Video Coding (AVC, ITU-T H.264/MPEG-4), High Efficiency Video Coding (HEVC, ITU-T H.265), Versatile Video Coding (VVC, ITU-T H.266), Essential Video Coding (EVC, MPEG-5), AOMedia Video 1 (AV1), AV2, VP9, or the Enhanced Compression Model (ECM) (Enhanced compression model) as described in document *JVET-AK2025: Algorithm description of Enhanced Compression Model 16 (ECM 16)* / *Joint Video Experts Team (JVET) of ITU-T SG 16 WP 3 and ISO*/*IEC JTC 1*/*SC 29, 37th Meeting, Geneva, CH, 14-22 January 2025,* and variations or improvements thereof. Those skilled in the art will understand that the various embodiments described herein are not limited to a specific standard and can be applied to other standards and recommendations, as well as extensions thereof.

Referring generally to FIG. 3 and the video encoder 300, video data (e.g., one or more video pictures) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame or picture) to be encoded is partitioned into CUs (blocks, macroblock, CTU, PU, TU, etc) by an image partitioner 302 as described in relation to FIG. 2.

In general, a block includes a luma block and associated chroma blocks. As such, functions of the video encoder 300 described herein as applied to a block refer generally to the luma block and the respective chroma blocks.

A block may be encoded using an intra prediction mode performed by an intra predictor 360. In intra prediction mode, the content of a block in a picture is predicted based on content from one or more other blocks of the same picture (or region), using reconstructed blocks output from an adder 355.

Intra prediction is applied in All-Intra pictures as well as in intra blocks in Inter pictures, where a target block is spatially predicted from causal neighbor blocks in the same picture, i.e., the blocks on the top and top-right, the blocks on the left and left-bottom, and the top-left block. Based on reconstructed pixel values in these blocks, the encoder constructs different predictions for the target block and chooses the one that leads to the best rate-distortion (RD) performance. In some implementations, the predictions are tested for "67" prediction modes, which include one PLANAR mode (indexed as mode "0"), one DC mode (indexed as mode "1"), and remaining 65 angular modes. The family of intra prediction modes is continuously evolving with improvements of existing modes or appearance of new modes.

A block may also or alternatively be encoded using an inter prediction mode, in which motion estimation and motion compensation are performed by a motion estimator 375 and a motion compensator 370, respectively. In inter prediction mode, the content of a block in a picture is predicted based on content from one or more reconstructed areas of reference pictures, available from a reference picture buffer (or decoded picture buffer (DPB) 380). A position of the reconstructed area (or reference area) in the reference picture is generally indicated by motion information. The motion information here includes an uni-prediction or bi-prediction type, a reference picture index within each reference picture list and (a) motion vector(s). Said motion information is used during the motion compensation 370 during which a residual block is calculated in the form of a difference between a predicted block and the reference area. One can note that for blocks predicted using a bi-temporal prediction (i.e., bi-predicted blocks), two reference areas are used to predict the block, each reference area being identified by its own motion information.

Two processes are employed to encode the motion information: AMVP (Adaptive Motion Vector Prediction) or Merge. In each process, the motion vectors are predicted.

Similarly to the family of intra prediction modes, the family of inter prediction modes is continuously evolving an improving.

One inter prediction mode adopted in recent video compression methods is Bi-prediction with CU-level Weight (BCW). In BCW, instead of computing a predictor by averaging two predictions (i.e., by averaging two predictor blocks), BCW allows a weighted average of the two predictions to generate the predictor. The following equation may be used to compute a predictor *P*_{BCW} in BCW: ${P}_{BCW} = \frac{\left(\left(8-W\right)\times {Pred}_{0}+W\times {Pred}_{1}+4\right)}{8}$ (eq.1) where W allows obtaining weights to be applied.

In VVC , five weights, each identified by an index (i.e., BCW index), are available.

**Table TAB1**

| BCW index | W |
|---|---|
| 0 | -2 |
| 1 | 3 |
| 2 | 4 |
| 3 | 5 |
| 4 | 10 |

One can note that with BCW index "2", corresponding to *W*=4, BCW is equivalent to a bi-prediction. No flag is signaled for indicating a use of BCW, the BCW index being sufficient for signaling an activation or deactivation of BCW at the block level.

The BCW index may be signaled by the encoder or its value may be inferred from neighbouring blocks based on a merge candidate index (inherited from merge candidates).

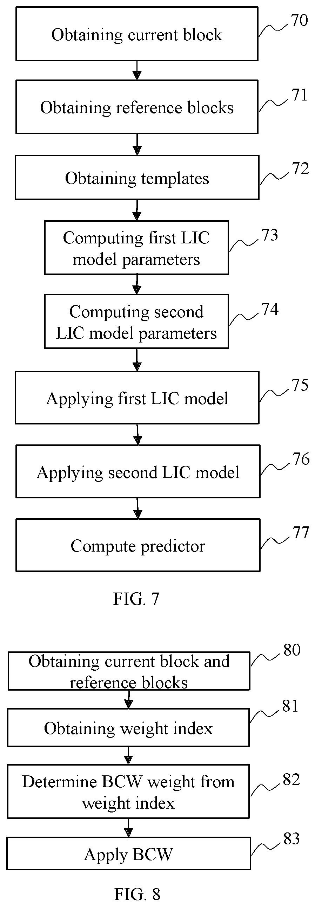

**FIG. 8** illustrates schematically a process for reconstructing a block according to the BCW mode.

The process of FIG. 8 is for example executed by the processor 110 of the system 100. The process of FIG. 8 may be also executed by the encoder module 130 or the decoder module 130 of the system 100.

In a step 80, the processor 110 obtains a current block and motion compensated reference blocks *Pred*₀ and *Pred*₁*.*

In a step 81, the processor 110 obtain a BCW index for the current block.

In a step 82, the processor 110 determines a weight *W* corresponding to the BCW index, for instance using table TAB1.

In a step 83, the processor 110 determines a BCW predictor *P*_{BCW} for the current block applying equation eq. 1 on the motion compensated reference blocks *Pred*₀ and *Pred*₁*.*

Another inter mode appeared recently is Local Illumination Compensation (LIC). Basically, the purpose of LIC is to compensate illumination changes which may occur between a predicted (current) block and its motion compensated reference block(s).

The use of LIC is typically signaled at the block level using a flag, i.e., LIC flag. In LIC, each sample of a predictor block is determined from a motion compensated block using a linear model defined by: $IC \left(x\right) = a \times x + b$ (eq.2)

Where *x* is a sample of a motion compensated reference block, *a* and *b* are the linear model parameters (called LIC parameters in the following) and *IC(x)* is a result of the illumination compensation of the sample *x* based on the LIC linear model.

The LIC parameters are estimated by minimizing a difference between samples in a L-shaped template of reconstructed samples neighboring the current block and samples in a L-shaped template of reconstructed samples neighboring the reference block corrected with the LIC parameters. The difference between the samples may be minimized under the least squares method as follows: $\left(a, b\right) = {argmin}_{\left(a, b\right)} \left({\sum }_{\begin{matrix}x ∈ curr template , \\ y ∈ ref template\end{matrix}} {\left(x-a\times y-b\right)}^{2}\right)$ (eq.3) (*a,b*) are the optimum LIC parameters, argmin(.) is the argument of the minimum and the summation is over each sample *x* in the L-shaped template neighboring the current block (curr template) paired with its corresponding sample *y* in the L-shaped template neighboring the reference block (ref template).

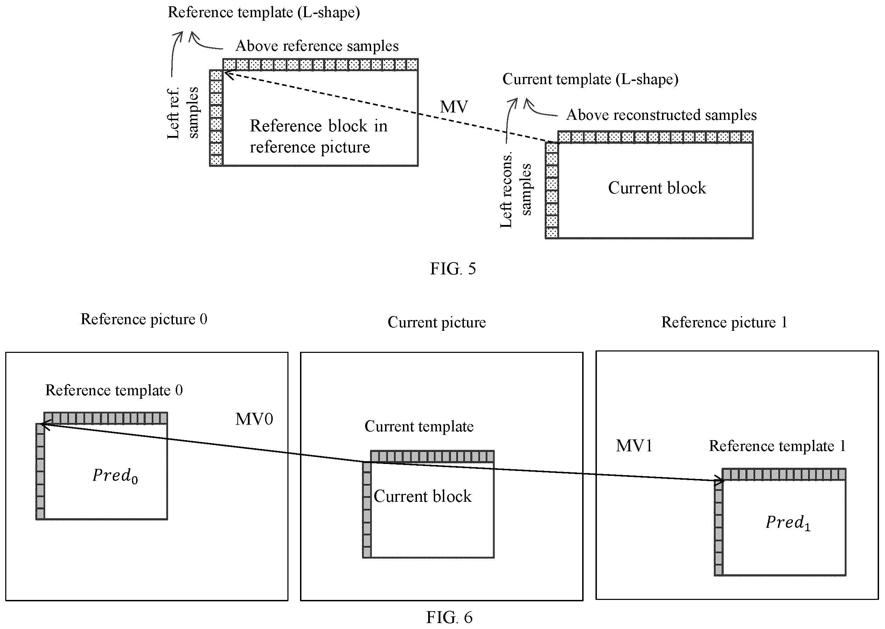

**FIG. 5** illustrates templates used in LIC.

In FIG. 5, we illustrated an example of LIC using a single prediction (i.e., uni-prediction LIC). Bi-prediction is also possible in LIC.

**FIG. 6** illustrates templates used in a bi-prediction LIC.

**FIG. 7** illustrates schematically a known process for reconstructing a block according to the bi-prediction LIC mode.

The process of FIG. 7 is for example executed by the processor 110 of the system 100. The process of FIG. 7 may be also executed by the encoder module 130 or the decoder module 130 of the system 100.

In a step 70, the processor 110 obtains a current block to predict.

In a step 71, the processor 110 obtains two reference blocks for the current block. The two reference blocks were obtained by motion estimation and motion compensation. A first reference block is comprised in a first reference picture of a list L1 of reference pictures. A second reference block is comprised in a second reference picture of a list L2 of reference pictures.

In a step 72, the processor 110 obtains templates in the neighborhood of the current block and the reference blocks. The templates are for example the templates *reference template 0, current template* and *reference template* 1 in FIG. 6.

In the implementation of FIG. 7, two pairs of LIC parameters are computed independently based on the minimization of equation (eq. 3): in a step 73, the processor 110 computes one pair (*a*₀*, b*₀) from the templates *reference template 0 and current template* and, in a step 74, the processor 110 computes a second pair (*a*₁, *b*₁) from the templates *reference template 1 and current template.*

In a step 75, the processor 110 applies the linear model with the first pair of LIC parameters (*a*₀*, b*₀) to the samples of the first motion compensated reference block (ref block 0 in FIG. 6) to obtain a first LIC predictor *Pred*₀*.*

In a step 76, the processor 110 applies the linear model with the second pair of LIC parameters (*a*₁*, b*₁) to the samples of the second motion compensated reference block (ref block 1 in FIG. 6) to obtain a second LIC predictor *Pred*₁*.*

In a step 77, the processor 110 combines the first and the second LIC predictors to generate a bi-prediction LIC predictor *Pred_{bi}.* Each sample *x_{bi}* of the bi-prediction LIC predictor *Pred_{bi}* may be computed as follows: ${x}_{bi} = \frac{{x}_{0} + {x}_{1} + 1}{2}$

Where *x*₀ is a sample of the first LIC predictor *Pred*₀ and *x*₁ is a corresponding sample of the first LIC predictor *Pred*₁*.*

BCW and LIC may be enabled for a same block. In that case, in some implementations, such as for example the implementation described in document EE2-Test2.7: Improvements on local illumination compensation, Xiaoyu Xiu, Ning Yan, Changyue Ma, Video Experts Team (JVET) of ITU-T SG 16 WP 3 and ISO/IEC JTC 1/SC 29, 30th Meeting, Antalya, TR, 21-28 April 2023*, JVET-AD0213,* the weighting of the motion compensated reference blocks by BCW is taken into account when deriving the LIC parameters.

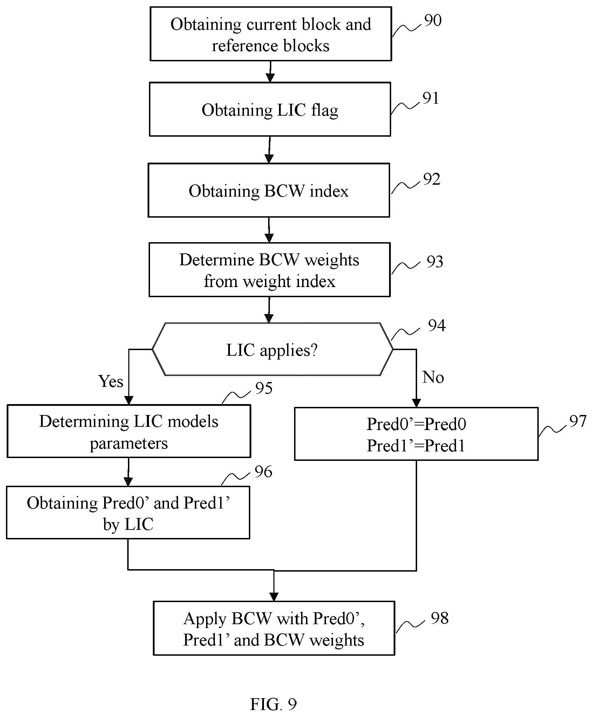

**FIG. 9** illustrates schematically an example of process of joint application of bi-prediction LIC and BCW on a same block.

The process of FIG. 9 is for example executed by the processor 110 of the system 100. The process of FIG. 9 may be also executed by the encoder module 130 or the decoder module 130 of the system 100.

In a step 90, the processor 110 obtains a current block and motion compensated reference blocks *Pred*₀ and *Pred*₁ for the current block.

In a step 91, the processor 110 obtains a LIC flag.

In a step 92, the processor 110 obtains BCW index.

In a step 93, the processor 110 determines a weight W corresponding to the BCW index, for instance using table TAB1.

In a step 94, the processor 110 determines if LIC applies to the current block from the LIC flag.

If LIC doesn't apply to the current block, the processor 110 determines, in a step 97, predictors *Pred'*₀ and *Pred'*₁ as follows: $Pred {′}_{0} = {Pred}_{0}$ $Pred {′}_{1} = {Pred}_{1}$

If LIC applies to the current block, in a step 95, the processor 110 determines two pairs of LIC models parameters (*a*₀*, b*₀) and (*a*₁*, b*₁) applying for example the following minimization: $\left({a}_{0}, {b}_{0}, {a}_{1}, {b}_{1}\right) = {argmin}_{\left({a}_{0}, {b}_{0}, {a}_{1}, {b}_{1}\right)} \left({\sum }_{\begin{matrix}x ∈ curr template , \\ {y}_{0} ∈ ref template 0 , \\ {y}_{1} ∈ ref template 1\end{matrix}} {\left(\begin{matrix}x \\ - \frac{\left(\left(8-W\right)\left({a}_{0}\times {y}_{0}-{b}_{0}\right)+W.\left({a}_{1}\times {y}_{1}-{b}_{1}\right)+4\right)}{8}\end{matrix}\right)}^{2}\right)$

As can be seen, the minimization takes into account the weighting of the motion compensated predictors by BCW.

In a step 96, the processor 110 obtains a predictor *Pred'*₁ by applying the LIC linear model with the LIC parameters (*a*₀*, b*₀) to the motion compensated predictor *Pred*₀ and a predictor *Pred'*₁ by applying the LIC linear model with the LIC parameters (*a*₁, *b*₁) to the motion compensated predictor *Pred*₁*.*

Steps 97 and 96 are followed by a step 98 wherein BCW is applied to obtain a BCW predictor *P*_{BCW}: ${P}_{BCW} = \frac{\left(\left(8-W\right)\times Pred{′}_{0}+W\times Pred{′}_{1}+4\right)}{8}$

As can be seen, BCW and LIC are independent inter tools, but linked by the weight applied to each prediction. Two signaling are required at block level: a BCW index to enable BCW and signal the weight W of each prediction, and a LIC flag to enable LIC. There is no real synergy between BCW and LIC, even though LIC and BCW are relatively close.

One can note that the document JVET-AD0213 (EE2-Test2.7: Improvements on local illumination compensation, Xiaoyu Xiu, Ning Yan, Changyue Ma, Joint Video Experts Team (JVET) of ITU-T SG 16 WP 3 and ISO/IEC JTC 1/SC 29 30th Meeting, Antalya, TR, 21-28 April 2023*)* proposed a bi-prediction LIC algorithm adopted in ECM, considering the weight to be applied to each prediction.

The video encoder 300 selects or otherwise determines at 305 which prediction mode (intra prediction mode and/or inter prediction mode) to use for encoding a CU. The selection is generally based on a rate/distortion optimization criterion (i.e. RDO criterion). The selected prediction mode may be enhanced (e.g., filtered) by a prediction enhancer 385. Based on the selected mode, a prediction for the CU is generated. A residual block is determined based on the prediction (i.e., prediction block, predicted CU) and the input CU. In some embodiments, such determination is made by a subtractor 310.

The residual block or a partition thereof (e.g., a transform block) is transformed into transform coefficients by a transformer 320. The transform coefficients are quantized by a quantizer 330. An entropy encoder 345 performs entropy encoding of the quantized transform coefficients and coding parameters (e.g., syntax elements including motion vectors and other control data) to form a bitstream of coded video data.

In addition to coding the original video blocks as described herein, the video encoder 300 reconstructs the coded blocks to provide references for future predictions. Thus, quantized transform coefficients (from the quantizer 330) are de-quantized by an inverse quantizer 340, and inverse transformed by an inverse transformer 350, to reconstruct (decode) the residual blocks. The reconstructed residual blocks and prediction blocks are combined (e.g., by the adder 355) to form reconstructed blocks. Thus, the video encoder 300 performs decoding operations through which the encoded images (pictures) are reconstructed.

In-loop filters 365 may be applied to the reconstructed image (formed by the reconstructed blocks). The filtered reconstructed image(s) are stored in the DPB 380 and used by the motion estimator 375 and motion compensator 370, as explained above. The in-loop filters 365 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

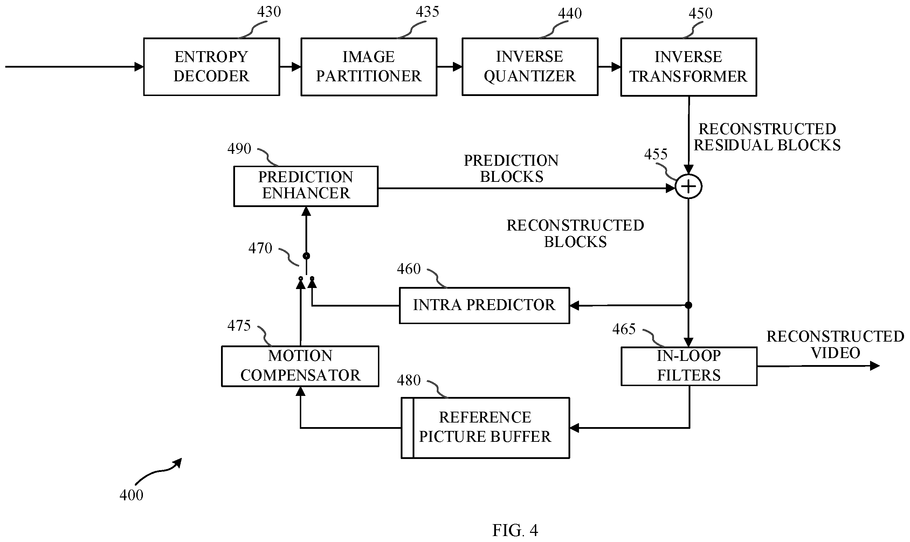

**FIG. 4** is a block diagram illustrating an example of video decoder 400 that may be employed by the system 100 (e.g., via the encoder/decoder module 130) described with respect to FIG. 1B. Generally, operational features of the video decoder 400 are reciprocal to operational features of the video encoder 300. In the video decoder 400, a coded video bitstream (e.g., generated by the video encoder 300 or another video encoding device or process) is entropy-decoded by an entropy decoder 430 to obtain transform coefficients, motion vectors, and other coding parameters. Based on the coding parameters, an image partitioner 435 divides the picture accordingly. The quantized transform coefficients are de-quantized by an inverse quantizer 440 and inverse transformed by an inverse transformer 450 to decode (reconstruct) respective residual blocks. Depending on the selected prediction mode, a predicted block can be obtained at 470 from an intra predictor 460 (i.e., intra prediction) or from a motion compensator 475 (i.e., inter prediction) and may be enhanced (e.g., filtered) by a prediction enhancer 490, generating a prediction block. The reconstructed residual blocks are combined with prediction blocks (e.g. by an adder 455), resulting in reconstructed blocks.

In-loop filters 465 (e.g., DBF, BIF, SAO, and/or ALF) can be applied to the reconstructed image (formed by the reconstructed blocks), to output reconstructed (decoded) video. The filtered reconstructed image is also stored in a reference picture buffer 480 for reference by the motion compensator 475.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 3. The post-decoding processor can use metadata derived by the pre-encoding processor and/or signaled in the video bitstream.

As seen above, no real synergy exists between LIC and BCW. BCW and LIC are two independent inter tools but linked by the weight applied to each prediction.

In a first aspect of the following embodiments, instead of using two linear models with two pairs of LIC parameters determined independently, a new Weighted-LIC (W-LIC) mode is proposed using a single model. The single model is for example the following: $IC \left({x}_{0}, {x}_{1}\right) = a \times {x}_{0} + b \times {x}_{1} + c$ (eq.4)

Where *x*₀ is a sample of the motion compensation reference block *Pred*₀*, x*₁ is a sample of the motion compensation reference block *Pred*₁*, IC*(*x*₀*, x*₁) is a result of the illumination compensation of the samples *x*₀ and *x*₁ based on the W-LIC model, *a, b* and c being the W-LIC parameters. One can note that other models may be used.

In a second aspect of following embodiments, since the bi-prediction LIC intrinsically applies a weight to each prediction, bi-prediction LIC is considered as a special case of BCW. Therefore, a value of the BCW index signals that the bi-prediction LIC mode applies to a current block. The LIC becomes an implicit mode of BCW.

As seen above, a characteristic of the W-LIC mode is to apply jointly the illumination compensations on the two motion compensated reference blocks. Based on the W-LIC model of equation 4, the W-LIC parameters a, b and c are obtained, for example, via the following minimization: $\left(a, b, c\right) = {argmin}_{\left(a, b, c\right)} \left({\sum }_{\begin{matrix}x ∈ current template , \\ {y}_{0} ∈ reference template 0 , \\ {y}_{1} ∈ reference template 1\end{matrix}} {\left(x-a\times {y}_{0}-b\times {y}_{1}-c\right)}^{2}\right)$ (eq.5)

Where x is a sample of the *current template* (see FIG. 6), *y*₀ is a corresponding sample of the *reference template 0* and *y*₁ is a corresponding sample of the *reference template 1.*

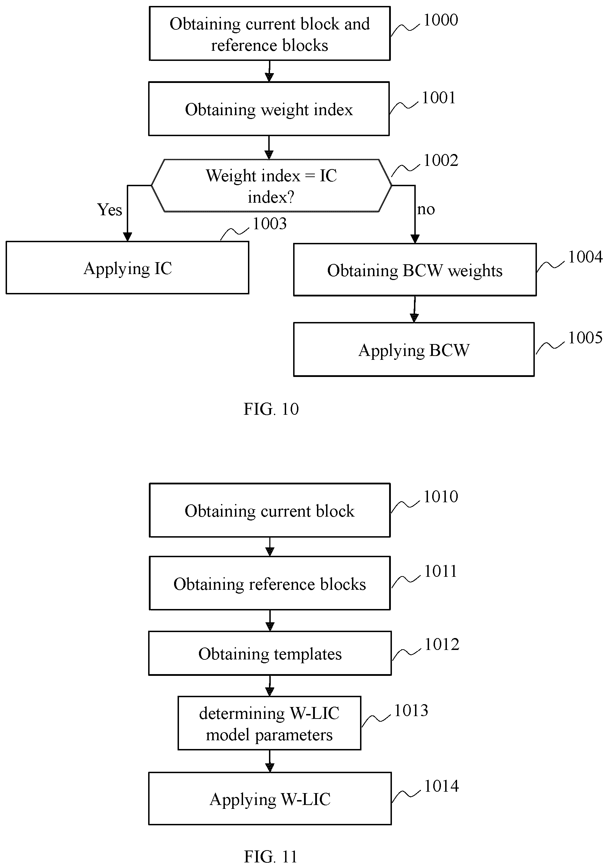

**FIG. 11** illustrates schematically the W-LIC mode.

The process of FIG. 11 is typically executed during a reconstruction of block encoded according to the W-LIC mode.

The process of FIG. 11 is for example executed by the processor 110 of the system 100. The process of FIG. 11 may be also executed by the encoder module 130 or the decoder module 130 of the system 100.

In a step 1010, the processor 110 obtains a current block.

In a step 1011, the processor 110 obtains a motion compensated reference block *Pred*₀ and a motion compensated reference block *Pred*₁ for the current block.

In a step 1012, the processor 110 obtains templates in the neighborhood of the current block and the motion compensated reference blocks. The templates are for example the templates *reference template 0, current template* and *reference template 1* in FIG. 6.

In a step 1013, the processor 110 determines the W-LIC parameters *a, b* and c applying for example the minimization of equation (eq. 5).

In a step 1014, the processor 110 determines a predictor according to the W-LIC mode (i.e., a W-LIC predictor) *P_{W-LIC}* applying the W-LIC model with the W-LIC parameters *a, b* and c determined in step 1013: ${x}_{W - LIC} = a \times {x}_{0} + b \times {x}_{1} + c$

Where *x_{W-LIC}* is a sample of the W-LIC predictor *P_{W-LIC}, x*₀ is a corresponding sample of motion compensated reference block *Pred*₀ and *x*₁ is a corresponding sample of motion compensated reference block *Pred*₁*.*

One can note that W-LIC may use different models such as: $IC \left({x}_{0}, {x}_{1}\right) = a \times {x}_{0} + b \times {x}_{1} + + a 2 \times {x}_{0}^{2} + b 2 \times {x}_{1}^{2} + d \times {x}_{0} \times {x}_{1} + c$ (eq.6) or $IC \left({x}_{0}, {x}_{1}\right) = a \times {x}_{0} + b \times {x}_{1} + d \times {x}_{0} \times {x}_{1} + c$ (eq.7)

In an embodiment, when BCW and W-LIC are jointly enabled for a current block, the W-LIC model is constrained by the weight W of BCW. In that case, for example, the model of equation eq. 5 becomes: ${x}_{W - LIC} = \left(1-W\right) \times {x}_{0} + b \times {x}_{1} + c$ or ${x}_{W - LIC} = a \times {x}_{0} + W \times {x}_{1} + c$

Regarding the second aspect, we have seen above that bi-prediction LIC (and also W-LIC) may be considered a particular case of BCW. In that case, the weights usually signaled by the BCW index may be inferred by the LIC model (or the W-LIC model).

**FIG. 10** illustrates schematically an example of embodiment wherein the synergy between an illumination compensation mode and BCW is improved.

The process of FIG. 10 is for example executed by the processor 110, the encoder module 130 or the decoder module 130 of the system 100. For instance, the process of FIG. 10 is executed by the processor 110 when the processor 110 implements the encoding method of FIG. 3. In another example, the process of FIG. 10 is executed by the processor 110 when the processor 110 implements the decoding method of FIG. 4.

The illumination compensation (IC) based mode is for example bi-prediction LIC or W-LIC.

In a step 1000, the processor 110 obtains a current block, a motion compensated reference block *Pred*₀ and a motion compensated reference block *Pred*₁ for the current block.

In a step 1001, the processor 110 obtains a weight index for the current block.

In a first embodiment of the process of FIG. 10, the weight index has a value provided by table TAB2 below:

**Table TAB2**

| weight index | IC or BCW based mode |
|---|---|
| 0 | IC |
| 1 | -2 |
| 2 | 3 |
| 3 | 4 |
| 4 | 5 |
| 5 | 10 |

As can be seen in the first embodiment, the weight index "0" indicates that an IC based mode is applied. Other weight indexes indicates weight values for BCW. One can note that table TAB2 forms an ordered list of IC based and BCW based modes. A value of the weight index is comprised in a set of values, at least one value of the set of values representing an IC based mode and at least one other value of the set of values representing a BCW based mode.

In a step 1002, responsive to the weight index indicates that the IC based mode applies (weight index = IC index = 0) the processor 110 continues with step 1003. During step 1003, the processor 110 derives IC parameters for the IC model and applies the IC model with the derived IC parameters to the motion compensated reference blocks *Pred*₀ and block *Pred*₁ to obtain an IC predictor *P*_{IC}. The current block is then reconstructed using the IC predictor *P*_{IC}.

In step 1002, responsive to the weight index indicates a BCW weight (weight index ≠ 0) the processor 110 obtains the BCW weights *W* corresponding to the weight index in a step 1004 and obtains a BCW predictor *P*_{BCW} in a step 1005. In other words, the processor 110 applies BCW with the BCW weights *W* using equation (eq. 1) corresponding to the weight index to obtain the predictor *P*_{BCW}. The current block is then reconstructed using the BCW predictor *P*_{BCW}.

In a second embodiment of the process of FIG. 10, a plurality of IC models are considered. These IC models are, for instance, derived from different templates or IC models with default models parameters. For example, a first IC model is based on a use of the full templates reference template 0, reference template 1 and current template to determine the IC mode parameters. A second IC model is based on a use of the left parts of the reference template 0, reference template 1 and current template to determine the IC mode parameters. A third IC model is based on a use of the above parts of the reference template 0, reference template 1 and current template to determine the IC mode parameters. Each IC model allows defining an IC based mode. With the example above, three IC based modes are defined: IC_full, IC_left and IC_above. In that case, the weight index has a value provided by table TAB3 below:

**Table TAB3**

| Weight index | IC or BCW based mode |
|---|---|
| 0 | IC_full |
| 1 | IC_left |
| 2 | IC_above |
| 3 | -2 |
| 4 | 3 |
| 5 | 4 |
| 6 | 5 |
| 7 | 10 |

Table TAB3 forms an ordered list of IC based and BCW based modes according to the second embodiment of the process of FIG. 10. One can note that in table TAB3, IC based modes may be a combination of W-LIC and bi-prediction LIC with same or different templates.

In Step 1002, the processor 110 determines if the weight index corresponds to an IC based mode. If yes, the processor 110 continues with step 1003. During step 1003, the processor 110 determines the IC model corresponding to the weight index. Then, the processor 110 derives IC parameters corresponding to the signaled IC model (i.e., using the full, left or above templates) and applies the signaled IC model with the derived IC parameters to the motion compensated reference blocks *Pred*₀ and block *Pred*₁ to obtain IC predictor *P*_{IC}.

In a third embodiment of the process of FIG. 10, the order of IC based and BCW based modes in the ordered list of IC based and BCW based modes (of table TAB2 or table TAB3) depends on the IC parameters. For example, the order in the list depends on a distance between IC parameters and the BCW weights.

In the case of W-LIC, the W-LIC model is: ${x}_{W - LIC} = {a}_{i} \times {x}_{0} + {b}_{i} \times {x}_{1} + c$

In the case of bi-prediction LIC, the two LIC models may be written as follows: ${x}_{LIC _ 1} = {a}_{i} \times {x}_{0} + {c}_{i}$ ${x}_{LIC _ 2} = {b}_{i} \times {x}_{0} + {d}_{i}$

The IC parameters considered for the computation of the distance are *aᵢ* and *bᵢ. i=0* when the ordered list of IC based and BCW based modes corresponds to table TAB2, and i=0, 1 or 2 when the ordered list of IC based and BCW based modes corresponds to table TAB3.

A distance *D*_{*i*,*j*} is computed for instance as follows: ${D}_{i , j} = \left|{a}_{i}-\left(1-{W}_{j}\right)\right| + \left|{b}_{i}-{W}_{j}\right|$ (eq.8)

Where |*x*| corresponds to the absolute value of *x, Wⱼ* is a BCW weight corresponding to the weight indexes "1" to "5" in table TAB2 and "3" to "7" in table TAB3. All combinations of IC parameters and BCW weights are then tested.

Taking the example of table TAB2, if *D*_{0,3} < *D*_{0,2} < *D*_{0*,*1} < *D*_{0*,*4} < *D*_{0*,*5}*,* in a first example the ordered list of IC based and BCW based modes is ordered by as in table TAB4:

**Table TAB4**

| Weight index | IC or BCW based mode |
|---|---|
| 0 | IC |
| 1 | 4 |
| 2 | 3 |
| 3 | -2 |
| 4 | 5 |
| 5 | 10 |

In the example of table TAB4, the BCW based modes are ordered in increasing order of distances to foster BCW based modes close to the IC modes. In another example, the BCW based modes may be ordered in decreasing order of distances to foster prediction diversity.

Usually, the weight index of BCW is only signaled in AMVP mode. In merge mode, the weight index may be inherited from an adjacent block when a merge candidates list is built. Therefore, in merge mode a current block can only inherits its BCW mode from a merge candidate. The BCW mode of the current block is therefore the same than the BCW mode of the merge candidate. Modifying the order of BCW modes in the ordered list of IC based and BCW based modes based on the distance with respect to the IC mode(s) offers a new functionality for the BCW mode in merge mode. Indeed, while in merge mode, a block inherits its weight index from a merge candidate, if the ordered list of IC based and BCW based modes of the current block is different from the ordered list of IC based and BCW based modes of the merge candidate, then the BCW mode of the current block may be different from the BCW mode of the merge candidate.

In a variant of the first, second or third embodiment, at least one IC model in the ordered list of IC based and BCW based modes may be an IC model inherited from a previous block.

Table TAB5 represents an ordered list of IC based and BCW based modes comprising an inherited IC model *IC_inh* for example from a last block encoded with an IC based mode.

**Table TAB5**

| Weight index | IC or BCW based mode |
|---|---|
| 0 | IC_full |
| 1 | IC_left |
| 2 | IC_inh |
| 3 | -2 |
| 4 | 3 |
| 5 | 4 |
| 6 | 5 |
| 7 | 10 |

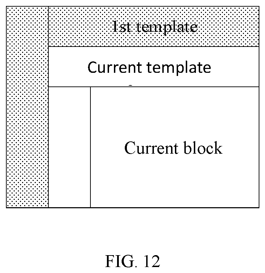

In a variant of the third embodiment, the IC based and BCW based modes in the ordered list of IC based and BCW based modes are reordered based on a computation of a distortion. The distortion is computed for each IC based and BCW based mode using a first template represented in **FIG. 12****.** In FIG. 12, an example of L-shape first template is represented in the neighborhood of the template *current template* neighboring the current block. The same first template exists in the neighborhood of the templates *reference template 0* and *reference template 1* neighboring respectively the motion compensated reference block *Pred*₀ and the motion compensated reference block *Pred*₁*.*

In this variant, the templates *current template, reference template 0* and *reference template 1* are used to determine the IC parameters of the IC based modes. For each IC based and BCW based modes of the ordered list of IC based and BCW based modes, a distortion D between the first template of the current block and a template predictor obtained from the first templates of the motion compensated reference blocks *Pred*₀ and *Pred*₁ is obtained as follows for the IC mode (supposing for example that the IC mode is the W-LIC mode): $D = {\sum }_{\begin{matrix}x ∈ 1 st template current block , \\ {y}_{0} ∈ 1 st template ref 0 , \\ {y}_{1} ∈ 1 st template ref 1\end{matrix}} {\left(x-a\times {y}_{0}-b\times {y}_{1}-c\right)}^{2}$

The distortion D between the first template of the current block and a template predictor obtained from the first templates of the motion compensated reference blocks *Pred*₀ and *Pred*₁ is obtained as follows for the BCW based mode: $D = {\sum }_{\begin{matrix}x ∈ 1 st template current block , \\ {y}_{0} ∈ 1 st template ref 0 , \\ {y}_{1} ∈ 1 st template ref 1\end{matrix}} {\left(x-\frac{\left(\left(8-W\right)\times {y}_{0}+W\times {y}_{1}+4\right)}{8}\right)}^{2}$

The ordered list of IC based and BCW based modes is then ordered in increasing order of the distortion D, at encoder and decoder sides.

One can note that when applying the process of FIG. 10 wherein the IC based modes are considered as particular cases of BCW based mode, the use of a LIC flag for signaling a use of an IC based mode becomes useless. Hence, no LIC flag is signaled in the context of the process of FIG. 10.

In another embodiment the LIC flag is used. In that case The IC based modes and the BCW based mode are mutual exclusive. In other words, if the IC flag indicates that an IC based mode is enabled for the current block, then the IC based mode is applied to the current block but no BCW based mode is applied to the current block. If the IC flag indicates that no IC based mode is enabled for the current block, then the BCW based mode is applied to the current block but no IC based mode is applied to the current block.

As already mentioned above, in current implementations, in merge mode, a current block inherits its BCW mode (i.e., its weight index of BCW) from a merge candidate. The weight index of the current block is therefore the same as the weight index of the merge candidate. When IC based modes and BCW based modes are mutual exclusive, when a block is encoded using an IC based mode, the weight index signaled for BCW is useless since it is known that BCW is disabled. Therefore, if a current block inherits its BCW mode from a merge candidate encoded using an IC based mode, the current block inherits a weight index that has not a real meaning.

In a variant of the embodiment using a LIC flag and wherein the IC based modes and the BCW based modes are mutual exclusive, the weight index signaled for BCW when a current block is encoded using an IC based mode is the weight index of table TAB1 the closest to the IC parameters of the current block according to the distance of equation eq. 8. In that case, when a block inherits its weight index from a merge candidate encoded using an IC based mode, the weight index of BCW is correlated with the IC parameters of the merge candidate. In merge mode, it is a way to modify the weight index of BCW to propagate this modification to neighbor blocks, without extra signaling.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining (1000) a current block and two motion compensated reference blocks for the current block;
obtaining (1001) an index for the current block, a value of the index being comprised in a set of values, at least one value of the set of values representing an illumination compensation (IC) based mode and at least one other value of the set of values representing a Bi-prediction merging with CU-level Weight (BCW) based mode; and,
obtaining a predictor for the current block according to the IC based mode (1003) or the BCW based mode (1004, 1005) from the two motion compensated reference blocks responsive to (1002) the index.

2. The method of claim 1 wherein each IC based mode is a local illumination compensation mode in which an IC model is determined for each motion compensation reference block, parameters of each IC model being determined based on a minimization of an error between a first template of reconstructed samples neighboring the current block and a first template of reconstructed sampled neighboring the motion compensated reference block.

3. The method of claim 1 wherein each IC based mode is a weighted local illumination compensation mode in which a single IC model is determined for the two motion compensation reference blocks, parameters of each IC model being determined based on a minimization of an error between a first template of reconstructed samples neighboring the current block and first templates of reconstructed sampled neighboring the motion compensated reference blocks.

4. The method of claim 2 or 3 wherein the set of values comprises at least two values representing an IC based mode, the parameters of the IC model used in each IC based mode being determined using different first templates.

5. The method of claim 2, 3 or 4 wherein, the set of values represents an ordered list of IC based modes and BCW based modes, an order of the BCW based modes in the ordered list depending on a distance between the parameters of the IC model of the IC based modes and weights of the BCW based modes.

6. The method of claim 2, 3 or 4 wherein, the set of values represents an ordered list of IC based modes and BCW based modes, an order of the BCW based modes in the ordered list depending on a distortion computed for each IC based mode and BCW based mode of the ordered list between a second template of reconstructed samples neighboring the current block and a prediction of the second template of reconstructed samples neighboring the current block obtained by applying the IC based mode or the BCW based mode on second templates of reconstructed samples neighboring the two motion compensated reference blocks.

7. The method of any previous claim wherein at least one value of the set of values representing an illumination compensation (IC) based mode represents an IC based mode using an IC model inherited from a previous block.

8. The method of any previous claims wherein, no additional syntax element is signaled for indicating a use of the IC based mode.

9. A device comprising electronic circuitry configured for:
obtaining (1000) a current block and two motion compensated reference blocks for the current block;
obtaining (1001) an index for the current block, a value of the index being comprised in a set of values, at least one value of the set of values representing an illumination compensation (IC) based mode and at least one other value of the set of values representing a Bi-prediction merging with CU-level Weight (BCW) based mode; and,
obtaining a predictor for the current block according to the IC based mode (1003) or the BCW based mode (1004, 1005) from the two motion compensated reference blocks responsive to (1002) the index.

10. The device of claim 9 wherein each IC based mode is a local illumination compensation mode in which an IC model is determined for each motion compensation reference block, parameters of each IC model being determined based on a minimization of an error between a first template of reconstructed samples neighboring the current block and a first template of reconstructed sampled neighboring the motion compensated reference block.

11. The device of claim 9 wherein each IC based mode is a weighted local illumination compensation mode in which a single IC model is determined for the two motion compensation reference blocks, parameters of each IC model being determined based on a minimization of an error between a first template of reconstructed samples neighboring the current block and first templates of reconstructed sampled neighboring the motion compensated reference blocks.

12. The device of claim 10 or 11 wherein the set of values comprises at least two values representing an IC based mode, the parameters of the IC model used in each IC based mode being determined using different first templates.

13. The device of claim 10, 11 or 12 wherein, the set of values represents an ordered list of IC based modes and BCW based modes, an order of the BCW based modes in the ordered list depending on a distance between parameters of the IC model of the IC based modes and weights of the BCW based modes.

14. The device of claim 10, 11 or 12 wherein, the set of values represents an ordered list of IC based modes and BCW based modes, an order of the IC based modes and of the BCW based modes in the ordered list depending on a distortion computed for each IC based mode and BCW based mode of the ordered list between a second template of reconstructed samples neighboring the current block and a prediction of the second template of reconstructed samples neighboring the current block obtained by applying the IC based mode or the BCW based mode on second templates of reconstructed samples neighboring the two motion compensated reference blocks.

15. The method of any previous claim from claim 9 to 14 wherein at least one value of the set of values representing an illumination compensation (IC) based mode represents an IC based mode using an IC model inherited from a previous block.
